Europäisches Patentamt

European Patent Office

Office européen des brevets

(19)

(11) EP 0 730 363 A1

## (12) DEMANDE DE BREVET EUROPEEN

(43) Date de publication:
04.09.1996 Bulletin 1996/36

(51) Int. Cl.$^6$: H04L 25/03, H04L 7/02

(21) Numéro de dépôt: 96400446.9

(22) Date de dépôt: 01.03.1996

(84) Etats contractants désignés:
BE DE ES FI GB IT NL SE

(30) Priorité: 02.03.1995 FR 9502429

(71) Demandeur: ALCATEL N.V.
NL-2288 BH  Rijswijk (NL)

(72) Inventeurs:
• Sehier, Philippe
92300 Levallois Perret (FR)
• Bertrand, Cyril
75017 Paris (FR)

(74) Mandataire: Scheer, Luc et al
SOSPI
14-16, rue de la Baume
75008 Paris (FR)

(54) **Dispositif et procédé de réception multidébit à filtrage unique d'interpolation et d'adaption**

(57)     L'invention concerne un dispositif de réception d'un signal numérique source émis à une ou plusieurs fréquences symboliques source $F_s$, du type comprenant des moyens (44) d'échantillonnage d'un signal analogique reçu et ramené en bande de base (43) délivrant un signal échantillonné entièrement démodulé, lesdits moyens (44) d'échantillonnage fonctionnant à une fréquence d'échantillonnage $F_e$ respectant la condition d'échantillonnage généralisée, ledit dispositif comprenant un module (48) de filtrage unique filtrant ledit signal échantillonné, ledit module (48) de filtrage comprenant un filtre numérique piloté par un vecteur de coefficients de filtrage et des moyens de détermination desdits coefficients de filtrage en fonction d'un critère de détermination tenant compte d'une part du rapport de ladite fréquence d'échantillonnage $F_e$ sur ladite fréquence source $F_s$, de façon à assurer une interpolation dudit signal échantillonné, et d'autre part d'une analyse du canal de transmission, de façon à limiter les perturbations introduites par ledit canal.

Fig. 4

Printed by Rank Xerox (UK) Business Services
2.13.4/3.4

## Description

Le domaine de l'invention est celui de la réception de signaux numériques dans des dispositifs prévus pour recevoir des signaux émis à différentes fréquences symboliques source. L'invention concerne notamment les modems multidébits, mis en oeuvre par exemple pour des transmissions par satellites ou par faisceaux hertziens.

L'invention peut ainsi s'appliquer à de nombreux domaines, tant civils que militaires, dès lors qu'il est envisagé de recevoir des signaux émis à au moins deux fréquences symboliques source distinctes.

On demande en effet aux modems, dans un nombre croissant d'applications, de savoir traiter une pluralité de débits. Cette caractéristique est notamment requise pour la plupart des applications de transmission par satellite. Par exemple, la norme IBS (International Business Systems) exige que les modems soient capables de traiter un grand nombre de débits, à partir de 64 kbps et jusqu'à 2Mbps.

Cette exigence d'agilité en débits est bien sûr la source d'une augmentation de la complexité des modems. En effet, les filtres d'émission et de réception, qu'ils soient analogiques ou numériques, ne sont plus fixes, mais doivent être ajustables en fonction du débit.

Par ailleurs, il est nécessaire de générer une pluralité d'horloges synchrone ou quasi-synchrones par rapport à chaque débit à traiter. Les oscillateurs à quartz (VCXO) utilisés dans les modems à débit fixe doivent être remplacés par des dispositifs de synthèse de fréquence beaucoup plus complexes.

On connaît déjà au moins trois architectures de récepteurs multidébits visant à répondre à ces exigences.

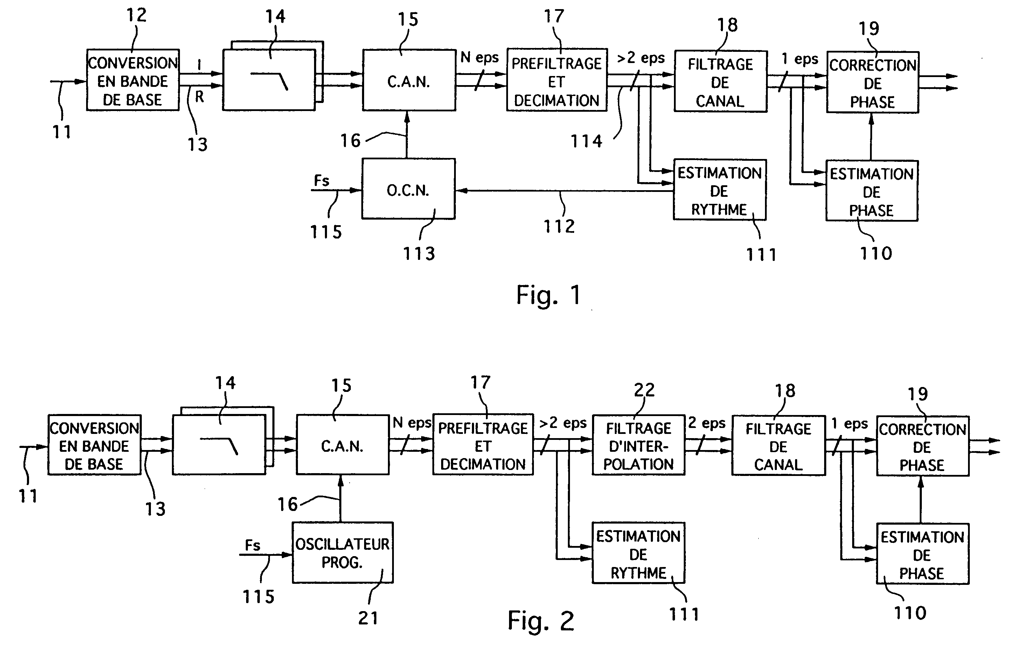

Un premier type connu, dit modem numérique classique, est illustré en figure 1.

Le signal reçu 11 est tout d'abord converti en bande de base, par un module 12 délivrant deux signaux convertis respectivement en phase et en quadrature 13. Les signaux en phase et en quadrature 13 subissent ensuite un filtrage analogique passe-bas 14. L'enveloppe complexe est filtrée au moyen d'une banque de filtres analogiques. Ces filtres ont une fonction d'anti-repliement du spectre, préalable à l'échantillonnage.

Le signal filtré est échantillonné par un module 15 de conversion analogique-numérique : l'enveloppe complexe filtrée est échantillonnée au moyen d'une horloge 16 de fréquence multiple de la fréquence symbole, synchronisée en phase avec le signal reçu. Les échantillons obtenus sont ensuite numérisés par un convertisseur.

Un module 17 de pré-filtrage et décimation atténue les perturbateurs hors-bande et effectue une décimation, variable en fonction du débit, de façon à ramener le facteur de suréchantillonnage à l'entrée du filtre de canal à une valeur entière généralement comprise entre 2 et 4, ainsi que le requiert l'estimateur de rythme.

Le filtre de canal effectue le filtrage adapté nécessaire à l'obtention de bonnes performances en taux d'erreur. Le critère d'optimisation de ce filtre consiste en général à effectuer le meilleur compromis entre l'intersymbole résiduel et la puissance de bruit à sa sortie.

Le signal filtré est transmis à un module 19 de correction de phase, agissant en fonction des données délivrées par un module 110 d'estimation de phase porteuse. L'erreur de phase est estimée à partir du signal issu du filtre de canal et corrigée. Les techniques d'estimation et de correction de phase porteuses se situent hors du champ de l'invention et ne seront donc pas décrites ici.

Les échantillons issus du préfiltre (ou éventuellement du filtre de canal) sont utilisés dans un module 111 d'estimation de rythme pour estimer l'écart temporel du signal reçu 17 avec la référence du récepteur (modulo le temps symbole). L'estimation est filtrée puis envoyée (112) vers l'oscillateur contrôlé numériquement 113 (commande en fréquence). Plusieurs algorithmes d'estimation de rythme peuvent être utilisés. Le point commun entre ces algorithmes est qu'ils nécessitent un facteur de suréchantillonnage du signal d'entrée 114 au moins égal à 2.

L'oscillateur commandé numériquement 113 doit délivrer un ensemble de fréquences multiples des débits à traiter 115. Il comporte également une entrée de modulation en fréquence 112, commandée par l'estimateur de rythme 110 qui permet d'asservir la phase de l'horloge à l'instant optimal de pointage.

Dans ce type de structure, le nombre de filtres analogiques du module 14 dépend des caractéristiques des perturbateurs à prendre en compte et de l'existence ou non d'un préfiltre.

Dans un mode de réalisation légèrement différent, la conversion en bande de base peut être effectuée numériquement, et non plus analogiquement. Dans ce cas, cette opération s'effectue bien sûr après la conversion analogique-numérique.

Selon un deuxième type de modem connu, illustré en figure 2, la fréquence de l'horloge d'échantillonnage est réglable en fonction du débit mais n'est pas synchronisée en phase. Ces modems sont appelés modems quasi-synchrones à interpolation. La fréquence d'échantillonnage généralement choisie est du type $qF_S+\varepsilon$ où $F_S$ désigne la fréquence symbole, q le facteur entier de suréchantillonnage et $\varepsilon$ un écart de fréquence très faible, calculé en fonction des caractéristiques de dérive en fréquence des oscillateurs d'émission et de réception.

Les modules 12, 14, 15, 17 à 111 sont similaires à ceux de la figure 1 et ne seront donc pas décrits à nouveau. La différence essentielle est que l'oscillateur 21 n'est plus contrôlé en phase par l'estimateur 111. En d'autres termes, cette architecture ne comporte pas de boucle (structure dite en anglais 'feedforward'). Elle possède également l'avantage de permettre la suppression de l'entrée de contrôle en fréquence de l'oscillateur.

EP 0 730 363 A1

Le principe précis de fonctionnement de ce type d'architecture est expliquée dans l'article "Digital Filter and Square Timing Recovery" de H. Meyr et M. Oerder (IEEE Transactions on communications - vol. 36, n° 5, mai 1988).

Dans cette architecture, la correction de l'erreur d'échantillonnage est effectuée au moyen d'un filtre numérique d'interpolation 22, contrôlé par l'estimation de rythme 111. Des exemples de filtres d'interpolation possibles sont décrits par Bucket et Moeneclaey, dans l'article "Symbol synchronizer performance affected by non-ideal interpolation in digital modems" ("Performance de la synchronisation symbolique affectée par une interpolation non-idéale dans les modems numériques") ICC 94, p. 929 (paper category : synchronization ; performance of digital receiver algorithms).

L'inconvénient majeur des deux architectures décrites ci-dessus est qu'elles représentent la mise en oeuvre d'un oscillateur à fréquence variable, qui est un élément complexe, fragile et coûteux, notamment lorsqu'il doit permettre des changements de fréquences rapides et selon des pas fins.

Un troisième type de modems, dit modems asynchrones à interpolation, peut être envisagé.

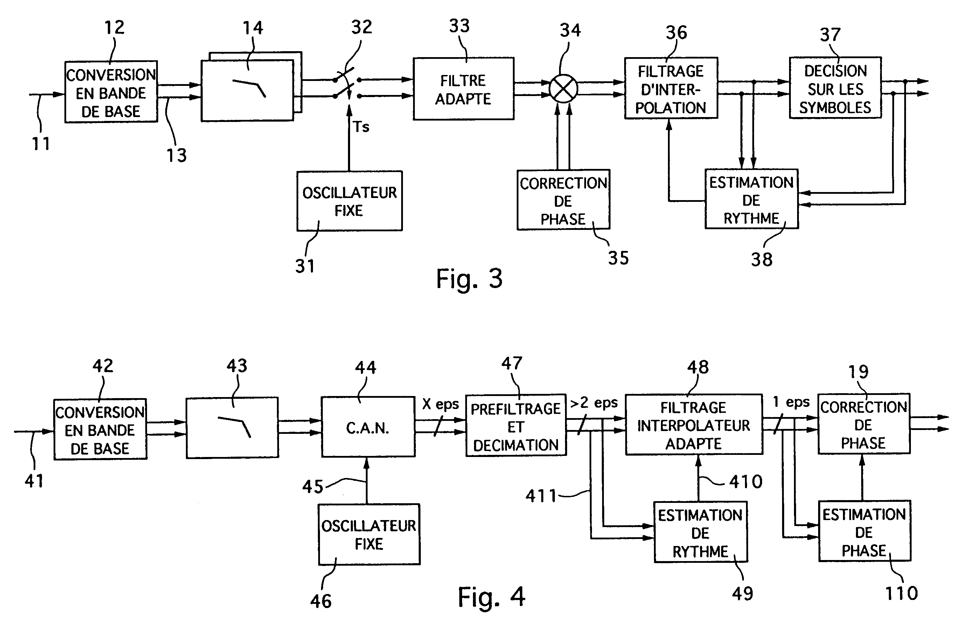

Un synoptique générique d'un tel modem est représenté en figure 3. Le signal 11 reçu est converti (12) en bande de base, puis subit un filtrage anti-repliement 14. Une horloge 31 d'échantillonnage fixe à la période Ts contrôle un échantillonneur 32, qui délivre des échantillons à un filtre adapté 33. Une correction de phase 34 est ensuite effectuée, sous le contrôle d'un module 35 de correction de phase.

Enfin, on effectue un filtrage d'interpolation 36, qui alimente un module 37 de décision sur les symboles. Le filtrage d'interpolation 36 est piloté par un module d'estimation de rythme 38, alimenté par les sorties du filtre d'interpolation 36 et du module de décision 37.

Une architecture de ce type, très voisine de celle du deuxième type, est notamment décrite dans l'article de Bucket déjà cité. L'avantage principal de cette architecture réside dans le fait que l'oscillateur d'échantillonnage 31 fonctionne à fréquence fixe. Il en résulte une simplification importante des dispositifs de génération d'horloge.

Dans le cas général, le facteur d'échantillonnage (X) devient un nombre fractionnaire, X correspondant au rapport de la fréquence d'échantillonnage sur la fréquence symbolique. Le fonctionnement de l'interpolateur 32 s'en trouve légèrement modifié par rapport à l'interpolateur du type précédent (une description détaillée est fournie dans Bucket).

Dans cette structure, le choix du facteur de suréchantillonnage à l'entrée de l'interpolateur résulte d'un compromis entre la complexité de l'interpolateur, celle du filtre de canal, et le niveau de performance souhaité. Un facteur de suréchantillonnage supérieur à 4 permet l'utilisation d'une interpolation d'ordre 1 (interpolation linéaire), très simple, avec une dégradation de performances minime, alors qu'un facteur de suréchantillonnage voisin de 2 nécessite un interpolateur beaucoup plus complexe. En contrepartie, la puissance de calcul nécessaire du filtre de canal, qui est proportionnelle au facteur de suréchantillonnage à sa sortie, augmente lorsque celle du préfiltre diminue.

Ces modems asynchrones à interpolation présentent donc l'avantage de mettre en oeuvre un oscillateur fixe. En revanche, ils présentent quelques inconvénients. Notamment, ils nécessitent un facteur de suréchantillonnage élevé, et en tout état de cause strictement supérieur à deux. Ainsi, pour qu'un interpolateur simple (d'ordre 1) puisse être utilisé, le facteur de suréchantillonnage à l'entrée de l'interpolateur doit être au moins égal à 4, ce qui nécessite des fréquences d'échantillonnage du signal élevées, chères à mettre en oeuvre pour des applications à débit élevé.

Par ailleurs, l'interpolateur 32 est intrinsèquement un dispositif sous-optimal, source de dégradation de performances du système.

De plus, les différents filtres mis en oeuvre utilisent une capacité de calcul importante, ce qui entraîne un encombrement (par exemple en surface de silicium) important, des coûts et/ou des temps de calcul élevés, et donc des coûts de production importants.

L'invention a notamment pour objectif de pallier ces différents inconvénients de l'état de la technique.

Plus précisément, un objectif de l'invention est de fournir un dispositif de réception multidébit, mettant en oeuvre un oscillateur à fréquence fixe et présentant une complexité réduite, par rapport aux dispositifs à interpolation de type connu.

Ainsi, l'invention a pour objectif de fournir un tel dispositif, nécessitant un temps de calcul, une capacité de calcul, un encombrement et/ou un coût de conception et de production réduits, par rapport aux dispositifs connus.

Un autre objectif de l'invention est de fournir un tel dispositif, qui soit plus précis que les dispositifs de l'art antérieur. Notamment, un objectif de l'invention est de fournir un tel dispositif n'introduisant pas la dégradation des performances dues à un filtre d'interpolation.

Encore un autre objectif de l'invention est de fournir un tel dispositif, capable de fonctionner à un facteur de suréchantillonnage réduit jusqu'à la valeur 2, sans dégradation des performances.

L'invention a également pour objectif de fournir un tel dispositif, capable de fonctionner à des débits très élevés, et pouvant changer rapidement et de façon précise de débit.

Ces objectifs, ainsi que d'autres qui apparaîtront par la suite, sont atteints selon l'invention par un dispositif de réception d'un signal numérique source émis à une ou plusieurs fréquences symboliques source $F_s$, du type comprenant des moyens d'échantillonnage d'un signal analogique reçu et ramené en bande de base délivrant un signal échantillonné entièrement démodulé,

lesdits moyens d'échantillonnage fonctionnant à une fréquence d'échantillonnage $F_e$ respectant la condition d'échantillonnage généralisée,

3

ledit dispositif comprenant un module de filtrage unique filtrant ledit signal échantillonné, ledit module de filtrage comprenant un filtre numérique piloté par un vecteur de coefficients de filtrage et des moyens de détermination desdits coefficients de filtrage en fonction d'un critère de détermination tenant compte d'une part du rapport de ladite fréquence d'échantillonnage $F_e$ sur ladite fréquence source $F_s$, de façon à assurer une interpolation dudit signal échantillonné, et d'autre part d'une analyse du canal de transmission, de façon à limiter les perturbations introduites par ledit canal.

Le signal filtré selon l'invention alimente en aval des moyens de traitement numérique du signal restituant le signal source, comprenant par exemple des moyens de décodage, des moyens d'extraction des signaux utiles source par reconnaissance de la structure d'une trame numérique de transmission, ou en tout autres moyens permettant de restituer le signal numérique source. Ces moyens ne font pas l'objet de l'invention, et ne sont donc pas décrits plus précisément.

Ainsi, selon l'invention, les opérations d'interpolation et de filtrage adapté sont assurées simultanément, par un module de filtrage unique. De cette façon, la complexité globale des filtrages peut être réduite, ce qui se traduit par un coût et une surface réduits.

Par ailleurs, on supprime ainsi le filtre d'interpolation, qui apparaîssait nécessaire dans l'état de la technique, dès lors que l'oscillateur utilisé avait une fréquence d'oscillation unique. On s'affranchit donc des dégradations de performances intrinsèques à un tel filtre d'interpolation.

Il est à noter que l'invention ne découle en aucune manière directement des modems asynchrones à interpolation connus, qui prévoient deux filtres distincts consécutifs. En effet, l'homme du métier a toujours considéré que le remplacement d'un oscillateur variable par un oscillateur fixe imposait la présence d'un interpolateur pour restituer les échantillons au bon rythme. Cet interpolateur doit bien sûr fonctionner à une fréquence élevée. Par ailleurs, tout récepteur doit comporter des moyens capables de réaliser un filtrage adapté, dès lors que le canal de transmission risque d'être perturbé. Notamment, il est nécessaire d'une part de filtrer les bruits thermiques et les brouilleurs, et d'autre part de supprimer, ou à tout le moins de limiter, les effets de l'interférence entre symboles.

Les opérations d'interpolation et de filtrage adapté sont théoriquement tout à fait distinctes. Elles sont effectuées à des rythmes différents, dans des buts différents et de façons différentes. Il n'y aurait donc aucune incitation pour l'homme du métier à les regrouper dans un même filtre. Au contraire, la littérature montre clairement que la présence de deux filtres est nécessaire. Par ailleurs, l'homme du métier considère que chacun de ces deux filtres est complexe, et cherche donc à les réaliser indépendamment.

De façon avantageuse, lesdits moyens de détermination comprennent d'une part des moyens de calcul d'une pluralité de jeux de vecteurs de coefficients de filtrage, mis en oeuvre lors d'une phase d'initialisation dudit dispositif, lesdits jeux de vecteurs étant stockés dans des moyens de stockage, chaque jeu de vecteurs correspondant à une fréquence symbolique source $F_s$ donnée,
et d'autre part des moyens de sélection du vecteur le plus efficace dans le jeu de vecteurs correspondant à la fréquence symbolique source $F_s$ du signal en cours de réception, en fonction du rapport $F_e/F_s$ et d'une estimation $\delta\tau$ du retard de transmission dudit signal source.

Ainsi, lors d'une phase d'initialisation, on détermine plusieurs vecteurs de coefficients pour chaque fréquence symbolique source. En fonctionnement normal, lorsqu'une fréquence symbolique est fixée, le fonctionnement du dispositif est particulièrement simple et rapide : il consiste essentiellement à sélectionner le meilleur vecteur de coefficients à appliquer parmi le jeu de vecteurs correspondant.

Il est à noter toutefois que d'autres techniques pour déterminer les coefficients de filtrage peuvent être mises en oeuvre sans sortir du cadre de l'invention. Notamment, les coefficients peuvent être adaptatifs (donc non fixés à l'initialisation) en fonction des évolutions du canal de transmission.

Du fait que les vecteurs de coefficients sont calculés une fois pour toutes, ils peuvent être mémorisés dans tous types de moyens de mémorisation. Il est cependant avantageux que lesdits moyens de stockage comprennent une mémoire vive (RAM).

En effet, ces mémoires sont plus rapides que les mémoires mortes classiques.

Selon un mode de réalisation préférentiel, ledit critère de détermination est un critère de minimisation de l'erreur quadratique moyenne.

En d'autres termes, le critère choisi vise à réaliser le meilleur compromis entre l'interférence intersymbole résiduelle et la puissance de bruit en sortie du filtre.

Dans un mode de réalisation particulier, ledit module de filtrage comprend une série de Lt cellules de filtrage identiques fonctionnant en parallèle, les sorties de chacune desdites cellules de filtrage étant multiplexées pour restituer le signal numérique entièrement démodulé.

Cette technique est particulièrement avantageuse, car elle repose sur la mise en oeuvre de plusieurs cellules simples et identiques. Du fait qu'elles travaillent en parallèle, le rythme de chaque cellule peut être divisée par Lt.

En effet, préférentiellement, chacune desdites cellules filtre une portion dudit signal échantillonné d'une durée Ts.Lt, Ts étant la durée d'un symbole dudit signal source, lesdites portions de signal étant décalées l'une par rapport à l'autre d'une durée Ts, dans le cas où l'on souhaite délivrer en sortie du module de filtrage un échantillon par symbole.

Classiquement, Lt peut être compris entre 5 et 10.

Avantageusement, lesdites cellules comprennent des moyens d'accumulation et de multiplication.

Dans un autre mode de réalisation particulier, ledit module de filtrage peut comprendre des moyens de mémorisation, dans lesquels est introduit ledit signal échantillonné, une portion dudit signal échantillonné étant relu et filtré tous les Ts, Ts étant la durée d'un symbole dudit signal source.

De façon préférentielle, lesdits moyens de détermination déterminent également le nombre de coefficients formant chacun desdits vecteurs de coefficients de filtrage.

Comme on le verra par la suite, il est souhaitable que le nombre d'accumulations nécessaires à l'obtention d'un échantillon filtré varie, en fonction du retard de transmission estimé et du décalage dû à l'échantillonnage asynchrone. Néanmoins, on pourra maintenir fixe le nombre de coefficients inclus dans un vecteur en complétant si nécessaire celui-ci avec des zéros.

Avantageusement, lesdits moyens de détermination déterminent également la durée de la portion de signal filtré par ledit module de filtrage. Dans ce cas, lesdits moyens de détermination peuvent modifier le nombre Lt de cellules mises en oeuvre.

Selon un mode de réalisation préférentiel de l'invention, ledit module de filtrage comprend :

- des moyens de stockage comprenant $N_j$ vecteurs de coefficients de filtrage ;
- Lt cellules de filtrage identiques fonctionnant en parallèle ;

et en ce que lesdits moyens de détermination effectuent les calculs suivants :

$$A(n) = A(n-1) + F_e/F_s + \hat{\delta}\tau_{(n)}.Fe$$

$$k_l(n) = VI(A(n))$$

$$k_f(n) = k_l(n-L_t) + 1$$

$$J(n) = VI(N_j.(A(n)-k_l(n)))$$

où :

$A(n)$ est une valeur mise à jour à chaque symbole a(n) ;
$[k_f(n), k_l(n)]$ définit l'intervalle des échantillons dudit signal échantillonné pris en compte pour déterminer la variable de décision relative au symbole a(n) ;
$J(n)$ désigne le numéro du vecteur de coefficients à mettre en oeuvre pour déterminer la variable de décision relative au symbole a(n) ;
$\delta\tau$ est une estimation de rythme relative, correspondant à la différence algébrique entre deux estimations de rythme successives.

De façon avantageuse, ledit module de filtrage unique est piloté par un signal de rythme délivré par un estimateur de rythme alimenté par ledit signal échantillonné.

Préférentiellement, ledit estimateur de rythme comprend des moyens de filtrage similaires audit module de filtrage, et exploitent les mêmes vecteurs de coefficients de filtrage.

Il apparaît clairement que cette technique permet de limiter la complexité du dispositif. Notamment, le module de filtrage et l'estimateur de rythme peuvent utiliser les mêmes vecteurs de coefficients, stockés dans les mêmes moyens de stockage.

Du fait que le retard de rythme varie relativement lentement, ledit estimateur de rythme peut être mis en oeuvre périodiquement, à des intervalles de temps relativement espacés, par rapport au temps symbole Ts.

Par exemple, le laps de temps peut être de l'ordre de quelques centaines de temps symbole.

Selon une caractéristique avantageuse de l'invention, un signal d'horloge unique, correspondant à l'horloge d'échantillonnage, pilote l'ensemble des composants formant ledit module de filtrage et/ou ledit estimateur de rythme.

L'invention concerne également un procédé de réception d'un signal numérique source émis à une fréquence symbolique source $F_s$ choisie parmi plusieurs fréquences symboliques source possibles, du type comprenant des étapes d'échantillonnage d'un signal analogique reçu et ramené en bande de base délivrant un signal échantillonné et de décodage restituant ledit signal numérique source,

ledit échantillonnage étant assuré à une fréquence d'échantillonnage $F_e$ fixe et quelconque, respectant le théorème d'échantillonnage de Shannon,

ledit procédé mettant en oeuvre un filtrage unique filtrant ledit signal échantillonné et délivrant un signal filtré auxdits moyens de décodage, comprenant :

une étape d'initialisation,consistant à déterminer une série de jeux de vecteurs de coefficients de filtrage, chaque jeu correspondant à une fréquence symbolique source $F_s$ donnée, et chaque vecteur correspondant à une situation de réception donnée, et

une étape de filtrage d'un signal source reçu, consistant à choisir le vecteur de coefficients de filtrage le plus précisément synchronisé pour corriger les effets du canal de transmission et/ou de l'échantillonnage asynchrone, dans le jeu de vecteurs correspondant à la fréquence symbolique source dudit signal source.

Préférentiellement, ladite étape d'initialisation comprend les étapes suivantes :

- détermination d'un gabarit du canal de transmission, correspondant aux brouilleurs susceptibles d'être rencontrés ; et
- pour chaque fréquence symbolique source $F_s$ :

    - choix d'une série de valeurs d'estimation $\tau$ de l'erreur de rythme ;
    - pour chaque valeur d'estimation de l'erreur de rythme :

        - calcul formel de la fonction de filtrage du canal de transmission, en dehors dudit filtrage unique ;
        - calcul du bruit en entrée dudit filtrage unique ;
        - calcul de l'erreur quadratique, sous une forme quadratique fonction de coefficients dudit filtrage unique ;
        - dérivation de ladite forme quadratique et recherche des zéros correspondants ; et
        - stockage des vecteurs de coefficients correspondants auxdits zéros.

D'autres caractéristiques et avantages de l'invention apparaîtront plus clairement à la lecture de la description suivante d'un mode de réalisation préférentiel de l'invention, donné à titre d'exemple illustratif et non limitatif et des dessins annexés dans lesquels :

- les figures 1 à 3 présentent trois schémas synoptiques de dispositifs de réception de l'art antérieur, correspondant respectivement à un modem numérique classique, un modem quasi-synchrone et un modem asynchrone à interpolation, et qui ont déjà été commentés en préambule ;
- la figure 4 est un schéma synoptique d'un dispositif de réception selon l'invention, comprenant un module unique de filtrage d'interpolation et de filtrage de canal ;
- la figure 5 présente un synoptique détaillé du module de filtrage de la figure 4 ;
- la figure 6 est un schéma illustrant le mode de calcul des coefficients de filtrage dans le module de filtrage de l'invention ;
- la figure 7 illustre la structure canonique du module de filtrage de la figure 4, organisé en N cellules parallèles ;
- la figure 8 présente de façon détaillée l'architecture d'une cellule de la figure 7 ;
- la figure 9 présente la logique globale de contrôle de la figure 7, commune à toutes les cellules ;
- la figure 10 illustre les signaux de contrôle utilisés dans la cellule de la figure 8.

Comme indiqué précédemment, la caractéristique essentielle de l'invention est de proposer un dispositif de réception multidébit dans lequel les fonctions d'interpolation et de filtrage de canal sont assurées par un seul filtre. La complexité globale de la fonction filtrage est donc diminuée de celle de la fonction d'interpolation. Cet avantage est obtenu au prix d'une légère augmentation de complexité du filtrage de canal, par rapport à l'état de la technique.

Cette association de l'interpolation et du filtrage adapté impose une contrainte supplémentaire à apporter à l'optimisation du filtre global. Ce filtre interpolateur-adapté assume en effet les tâches suivantes :

- interpolation optimale à partir de la valeur fournie par l'estimateur de rythme ;
- filtrage sélectif du bruit (bruit thermique et brouilleurs) ;
- annulation de l'interférence entre symboles (filtrage adapté à l'ensemble du canal).

La figure 4 illustre de façon schématique un dispositif de réception, tel qu'un modem multidébit, selon l'invention. Les modules classiques déjà décrits en relation avec les figures 1 à 3 ne sont pas décrits à nouveau.

Le signal reçu 41 est donc ramené en bande de base (42), filtré à l'aide d'un filtre analogique passe-bas 43, échantillonné à l'aide d'un convertisseur analogique-numérique 44 contrôlé par un signal d'échantillonnage fixe 45 délivré par un oscillateur fixe 46. La fréquence du signal d'échantillonnage est quelconque, dès lors qu'elle respecte la "condition d'échantillonnage généralisée".

On rappelle que les fréquences satisfaisant cette condition, selon laquelle le signal continu et sa version échantillonnée sont porteurs strictement de la même information, sont celles appartenant à l'ensemble Df définit, pour un signal x(t) de type passe-bande $[f_m, f_M]$ comme suit :

$$Df= [2f_M/(n_0+1) \; ; 2f_m/n_0] \cup [2f_M/n_0 \; ; 2f_m/(n_0-1)] \cup [2f_M/(n_0-1) \; ; 2f_m/(n_0-2)] \cup ... \cup [2f_M/2 \; ; 2f_m] \cup [2f_M \; ; +\infty[$$

où $n_0 = E \, [f_m/(f_M-f_m)]$

Les échantillons sont donc délivrés au rythme de X par symboles source, X pouvant être un réel non entier quelconque supérieur à 1.

Ces échantillons subissent un préfiltrage et une décimation 47, ramenant le nombre d'échantillons à un nombre proche mais supérieur à 2 échantillons par symbole source.

Les échantillons conservés alimentent d'une part un module 48 de filtrage d'interpolation et de filtrage de canal selon l'invention, et d'autre part un module 49 d'estimation de rythme, permettant de synchroniser (410) les échantillons avec la cadence des symboles émis.

Le module unique de filtrage 48 est un filtre numérique présentant les caractéristiques suivantes :

- en tant que filtre interpolateur, il renouvelle si nécessaire ses coefficients à chaque nouvel échantillon entrant ;
- en tant que filtre adapté, il dispose de jeux de coefficients qui, convolués avec le filtre correspondant à l'ensemble du canal, respectent le critère de Nyquist.

Il est décrit plus en détail par la suite.

L'estimateur de rythme 49 présente préférentiellement une structure similaire à celle du module 48 de filtrage. L'estimateur de rythme 49 demande 4 échantillons par symbole. Or, il suffit d'un seul échantillon par symbole en sortie du filtre 48. Il est inutile de surcharger ce filtre principal en lui imposant une cadence quadruple, comme cela serait nécessaire si l'on choisissait d'utiliser les échantillons sortant du filtre 48 pour alimenter l'estimateur.

On se contente donc d'effectuer une estimation de rythme de temps en temps sur la ligne dérivée 411 qui mène à l'estimateur de rythme 49. Un filtre interpolateur de même nature que le filtre principal est chargé sur cette ligne de produire 4 échantillons filtrés et resynchronisés par symbole, une fois tous les Nsymb symboles. Nsymb vaut typiquement quelques centaines : durant le laps de temps correspondant, la valeur du retard de rythme varie peu.

Moyennant l'addition de ce second filtrage occasionnel 49, la structure globale apparaît sous une forme "feed-forward".

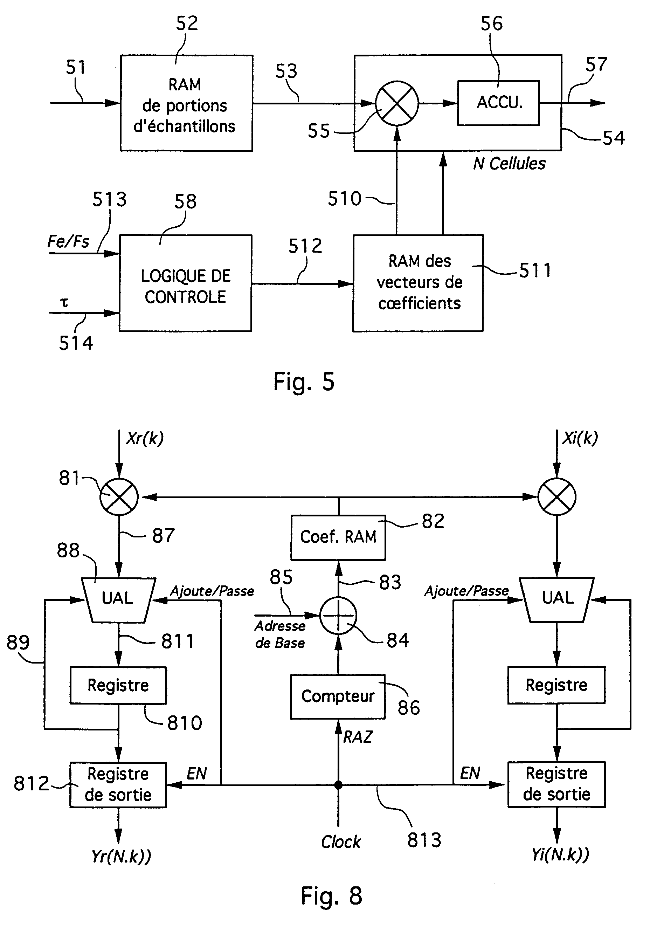

La figure 5 illustre la structure générale du module 48 de filtrage.

Les échantillons entrants 51, délivrés par le module 47 de préfiltrage sont stockés dans une mémoire RAM 52, en continu, au rythme auquel ils arrivent. Ils sont extraits (en lecture) de la RAM par portions. Chaque portion d'échantillons 53 est transmise aux moyens 54 de filtrage, qui sont avantageusement formés de N cellules de structure identique composée de multiplieurs 55 et d'accumulateurs 56. Ils délivrent les échantillons filtrés 57, qui peuvent ensuite subir un décodage source.

Selon l'invention, le module de filtrage comprend une logique de contrôle 58, qui assure deux fonctions :

- elle fixe le format des portions d'échantillons 53, en délivrant des informations 59 fixant les bornes de ces portions ;
- elle sélectionne le vecteur 510 de coefficients de filtrage à appliquer dans le module de filtrage, en pilotant de façon adéquate à travers 512 une mémoire RAM 511 de stockage de vecteurs de coefficients.

Ces deux fonctions sont réalisées en tenant compte de deux informations :

- le débit du signal source, par exemple sous la forme du rapport $F_e/F_s$ 513 ;
- une estimation 514 de rythme, délivrée par un estimateur classique.

Les vecteurs de coefficients 510 peuvent être recalculés par la logique de contrôle 58. Toutefois, cela demande une capacité de calcul très importante. Il est donc avantageux que les jeux de vecteurs de coefficients soient calculés lors d'une phase d'initialisation. La logique de calcul a alors simplement pour but de sélectionner le meilleur vecteur de coefficients.

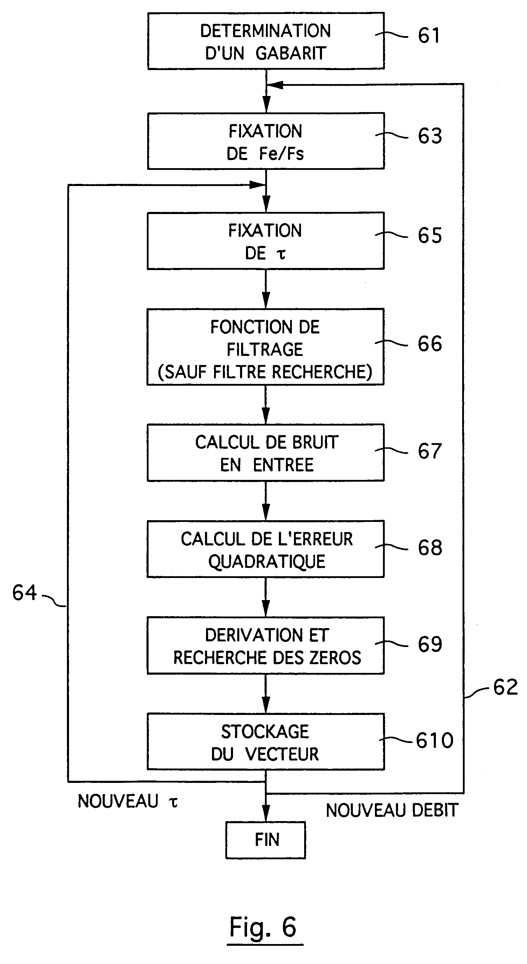

Un exemple de procédé de calcul de ces coefficients est illustré par le synoptique de la figure 6.

Tout d'abord, on fixe (61) un gabarit du canal, correspondant aux brouilleurs (qu'il s'agisse ou non de bruits intentionnels) susceptibles d'être rencontrés. Ensuite, pour chaque débit $F_s$ susceptible d'être traité par le dispositif (boucle 62), on fixe (63) le rapport $F_e/F_s$ ($F_e$ étant la fréquence fixe d'échantillonnage).

Pour chacun de ces débits, on calcule un jeu de vecteurs de coefficients de filtrage, chaque vecteur correspondant à une valeur donnée de l'estimation de rythme $\tau$ (boucle 64).

On fixe donc une valeur de $\tau$ (65). Avantageusement, ces valeurs de $\tau$ sont équiréparties dans l'intervalle [0, 1]. Pour chacune de ces valeurs :

- on calcule (66) de façon formelle la fonction de filtrage du canal entier, en dehors du filtre recherché ;
- on calcule (67) la formule du bruit à l'entrée de ce filtre. Le bruit passe en particulier par le préfiltre ;

- on calcule (68) l'erreur quadratique, par exemple à l'aide de l'équation présentée par la suite. On cherche à exprimer cette erreur comme une forme quadratique du second ordre en fonction des coefficients du filtre interpolateur adapté de l'invention ;
- on calcule (69) la dérivation de cette forme quadratique et on recherche les zéros, par exemple par inversion matricielle ;
- on stocke (610) le vecteur de coefficients correspondant à ces zéros dans la mémoire RAM prévue à cet effet.

Il apparaît alors clairement que le fonctionnement du dispositif revient à :

- sélectionner un jeu de vecteurs, en fonction du rapport $F_e/F_s$ ;
- sélectionner un vecteur, dans ce jeu, en fonction de l'estimation de rythme $\tau$ et de la position temporelle de l'échantillon interpolé souhaité.

On précise maintenant les techniques de calculs pouvant être mises en oeuvre selon l'invention.
Le signal reçu a pour expression :

$$r(t) = \sum_{-\infty}^{+\infty} a_k \cdot g(t - \tau(t) - k.T_s) + n(t) \qquad (Eq.1)$$

où :

- $g(t)$ désigne la réponse impulsionnelle de l'ensemble du filtrage de canal : filtrage émission, filtre anti-repliement, et préfiltre ;
- $n(t)$ désigne le bruit thermique après passage dans l'ensemble des filtres de réception : filtre anti-repliement et préfiltre ;
- $a_k$ désigne le symbole émis à l'instant $k.T_S$ ;
- $\tau(t)$ désigne le retard temporel du signal reçu (supposé lentement variable par rapport à la fréquence symbole).

La variable de décision U(n) relative au symbole $a_n$ est obtenue par échantillonnage à l'instant $n.T_s + \tau$ de la sortie du filtre réception de réponse impulsionnelle h(t), où $\tau$ désigne le retard temporel du signal reçu. En adoptant formellement une écriture à temps continu, U(n) peut s'écrire comme suit :

$$U(n) = \int_{-\infty}^{+\infty} r(t).h(n.T_s + \tau(n) - t).dt \qquad (Eq.2)$$

Lorsque g(t) vérifie le critère de Nyquist, h(t) est le filtre adapté à g(t) et s'exprime par la relation : $h(t) = g^*(-t)$ . Dans un cas plus général, h(t) est choisie de façon à optimiser les performances du système. Usuellement, h(t) est choisie de façon à réaliser le meilleur compromis entre l'intersymbole résiduel et la puissance de bruit en sortie du filtre en utilisant par exemple le critère dit 'Minimum Mean Square Error'.
Dans un récepteur numérique, l'opération est effectuée en temps discret et l'algorithme de filtrage correspondant s'écrit :

$$U(n) = \sum_{-\infty}^{+\infty} r(k.T_e).h(n.T_s + \tau(n) - k.T_e) \qquad (Eq.3)$$

où $T_e$ désigne la période d'échantillonnage à l'entrée du filtre de canal.
Pour des raisons de réalisabilité, la somme infinie doit être tronquée à un nombre fini de termes. L'algorithme devient :

$$U(n) = \sum_{k_f(n)}^{k_l(n)} r(k.T_e).h(n.T_s + \tau(n) - k.T_e) \qquad (Eq.4)$$

où $k_f(n)$ et $k_l(n)$ sont deux entiers choisis de telle sorte que l'intervalle $[k_f(n).T_e, k_l(n).T_e]$ contienne la majeure partie de l'énergie de la fonction $h(n.T_s - \tau - k.T_e)$.

Soit $L_t$ (entier) la longueur de troncature, définie de telle sorte que $[(-L_t/2).T_s, (L_t/2).T_s]$ représente le support temporel de h(t) après troncature. D'après ce qui précède, $k_f(n)$ et $k_l(n)$ doivent être choisis de telle sorte que :

$$n.T_s + \tau(n) - k_f(n).T_e \approx \frac{L_t}{2}.T_s \qquad (Eq.5)$$

$$n.T_s + \tau(n) - k_l(n).T_e \approx \frac{L_t}{2}.T_s$$

En définissant A(n) comme suit :

$$A(n) = \frac{L_t}{2}.\frac{T_s}{T_e} + n.\frac{T_s}{T_e} + \frac{\tau(n)}{T_e} \qquad (Eq.6)$$

$k_l(n)$ et $k_f(n)$ peuvent être choisis ainsi :

$$k_l(n) = \lfloor A(n) \rfloor$$
$$k_f(n) = k_l(n - L_t) + 1 \qquad (Eq. 7)$$

Ce choix respecte les égalités approximées des équations 5 et satisfait les impératifs d'un filtrage rigoureusement synchrone.

En réarrangeant l'indice de sommation de l'équation 4, on obtient le nouvel algorithme de filtrage suivant :

$$U(n) = \sum_{k=0}^{k_l(n)-k_f(n)} r(-k.T_e + k_l(n).T_e).h(\varepsilon(n).T - e - \frac{L_t}{2}.T_s + k.T_e) \qquad (Eq.8)$$

où $\varepsilon(n)$ est défini par :

$$\varepsilon(n) = A(n) - k_l(n) = A(n) - \lfloor A(n) \rfloor \qquad (Eq. 9)$$

Il apparaît donc que la fonction de filtrage à appliquer dépend de la quantité $\varepsilon(n)$, comprise dans l'intervalle [0,1[. Dans le cas où le rapport $F_e/F_s$ n'est pas rationnel, $\varepsilon(n)$ peut prendre toutes les valeurs comprises entre 0 et 1. Pour des raisons pratiques, il est donc nécessaire de limiter le nombre de filtrages possibles. Ceci est obtenu en quantifiant $\varepsilon(n)$ sur un nombre fini de valeurs. Si $N_j$ désigne le nombre de fonctions de filtrage possible et $\varepsilon_q(n)$ la valeur quantifiée de $\varepsilon(n)$ selon la règle de plus proche voisin, on a la relation :

$$\varepsilon_q(n) = \frac{1}{N_j}\left(\left\lfloor N_j.\varepsilon(n)\right\rfloor + \frac{1}{2}\right) \quad \text{(Eq. 10)}$$

Le numéro du jeu de coefficients J(n) à appliquer pour le symbole n est donné par :

$$J(n) = \left\lfloor N_j.\varepsilon(n)\right\rfloor \quad \text{(Eq. 11)}$$

et l'algorithme de filtrage correspondant est :

$$U(n)= \sum_{k=0}^{k_l(n)-k_f(n)} r(-k.T_e+k_l(n).T_e).c_{J(n)}(k) \quad \text{(Eq.12)}$$

Avec :

$$c_{J(n)}(k)=h(\varepsilon_q(n).T_e-\frac{L_t}{2}.T_s+k.T_e) \quad \text{(Eq.13)}$$

Le retard temporel $\tau(n)$ est en réalité estimé par le récepteur. Du fait de l'architecture retenue, la valeur estimée par le récepteur n'est pas la valeur absolue de ce retard, mais une estimation de l'écart des références temporelles du récepteur entre les instants $(n-1).T_s$ et $n.T_s$. Ceci vient du fait que l'on applique à l'instant $n.T_s$ le jeu de coefficients optimal à l'instant $(n-1).T_s$. Si $\hat{\delta}_\tau(n)$ désigne l'écart estimé à l'instant $n.T_s$, l'estimation absolue du retard à l'instant $n.T_s$ notée $\hat{\tau}(n)$ est donnée par :

$$\hat{\tau}(n) = \sum_{i=-\infty}^{n}\delta_\tau(i) \quad \text{(Eq. 14)}$$

D'après ce qui précède, il apparaît que le nombre de coefficients du filtre, égal, pour le symbole n, à $k_l(n) - k_f(n) + 1$, n'est pas constant. Puisque $\delta_\tau(n)$ varie dans l'intervalle

$$[-\frac{1}{2F_s},\frac{1}{2F_s}],$$

$\tau(n)$ peut varier, après $L_t$ coups d'horloge de 'Clock', dans

$$[-\frac{L_t}{2F_s},\frac{L_t}{2F_s}].$$

Comme $k_l(n)$ et de $k_f(n)$ respectent les équations suivantes :

$$k_l(n) = \lfloor A(n) \rfloor$$

$$k_f(n) = \left\lceil A(n) - L_t \cdot \frac{F_e}{F_s} - F_e \cdot \sum_{i=n-L_t+1}^{n} \delta_\tau(i) \right\rceil$$

$(k_l(n)\text{-}k_f(n)+1)$ peut en toute généralité varier dans l'intervalle

$$[\frac{L_t}{2} \cdot \frac{F_e}{F_s}, \frac{3 . L_t}{2} \cdot \frac{F_e}{F_s}],$$

avec une valeur moyenne de : $L_t \cdot \frac{F_e}{F_s}$.

En régime permanent, la contribution de l'erreur de rythme est négligeable, et le nombre de coefficients varie dans un intervalle beaucoup plus réduit que celui mentionné ci-dessus. En négligeant l'influence de l'erreur de rythme, le nombre de coefficients varie entre $VI(L_t . F_e/F_s)$ et $VS(L_t . F_e/F_s)$, où VI est la fonction associant la première valeur entière inférieure, également symbolisée par [.] et VS est la fonction associant la première valeur entière supérieure, également symbolisée par [.].

Par exemple, lorsque $F_e/F_s = 4,1$ et que la longueur de troncature $L_t$ vaut 8, le nombre de coefficients alterne entre 32 et 33.

Pour des raisons pratiques, il est souhaitable que le nombre de coefficients non nuls $N_{coef}$ soit constant. On choisit de prendre $N_{coef} = VI(L_t . F_e/F_s)$. Dans ces conditions, l'algorithme pratique de filtrage devient :

$$U(n) = \sum_{k=0}^{N_{coef}-1} r(-k . T_e + k_l(n) . T_e) . c_{J(n)}(k) \qquad (Eq.15)$$

On a jusqu'ici supposé que les jeux de coefficients étaient obtenus par troncature et décalage d'une certaine fonction de filtrage. Il est connu que cette méthode est sous-optimale. De tels coefficients ont en effet été optimisés en l'absence de toute contrainte sur leur longueur : ils sont optimaux en tant que coefficients de filtres à réponse impulsionnelle infinie. Dès lors qu'on les tronque, ils perdent dans le cas général leur optimalité. En particulier, cette méthode entraîne une perte significative de performances lorsque la longueur de troncature est faible.

Bien que cette technique soit utilisable, on peut également procéder différemment. La méthode de synthèse proposée vise à assurer un compromis optimal entre l'intersymbole résiduel et la puissance de bruit en sortie du filtre, sous la contrainte d'un nombre fini de coefficients. Mathématiquement, elle peut être exprimée comme suit : trouver pour chaque valeur quantifiée du décalage $\varepsilon$, le jeu de coefficients $C_\varepsilon = [c_\varepsilon(0), c_\varepsilon(1) . c_\varepsilon(N_{coef}\text{-}l)]$ qui minimise la fonction $J(C_\varepsilon)$, définie par :

$$J(C_\varepsilon) = E[|\sum_{k=0}^{N_{coef}-1} r(-k . T_e + k_l(n) . T_e) . c_\varepsilon(k) - a_n|^2] \qquad (Eq.16)$$

Cette fonction de coût, quadratique, fournit une méthode de synthèse simple. Il est également possible d'utiliser une fonction de coût proportionnelle aux taux d'erreur ou à une borne sur le taux d'erreur. Toutefois, ce type de technique ne fournit pas de méthode de synthèse simple.

En résumé, l'algorithme de contrôle du filtrage, sonnant, pour chaque symbole, les indices du premier et du dernier échantillon de signal reçu à utiliser, ainsi que le numéro du jeu de coefficients à utiliser, est résumé ci-après :

$$A(n) = A(n\text{-}1) + F_e/F_s + \hat{\delta}_\tau n).F_e$$

$$k_l(n) = VI(A(n))$$

$$k_f(n) = k_l(n-L_t) + 1$$

$$J(n) = VI(N_j.(A(n)-k_l(n)))$$

où (récapitulatif) :

- A(n) désigne la valeur de l'accumulateur à l'instant $n.T_s$ ;
- $[k_f(n), k_l(n)]$ désigne l'intervalle d'indice des échantillons de signal reçue utilisés pour déterminer la variable de décision relative au symbole a(n);
- J(n) désigne le numéro du jeu de coefficients utilisés pour déterminer la variable de décision relative au symbole a(n);
- $N_j$ désigne le nombre de jeux de coefficients (fonction du facteur de suréchantillonnage).

Le filtre interpolateur ainsi obtenu peut être réalisé au moyen de $L_t$ cellules de multiplication - accumulation, chaque cellule fournissant une variable de décision sur $L_t$. La cellule 0 fournie les $U(L_t)$, la cellule 1 fournit les U(Lt+1) et ainsi de suite.

Cette structure est possible du fait que les vecteurs d'échantillons utilisés par chaque cellule sont disjoints et contigus. Cela justifie le choix effectué pour la détermination de $k_f(n)$ et $k_l(n)$.

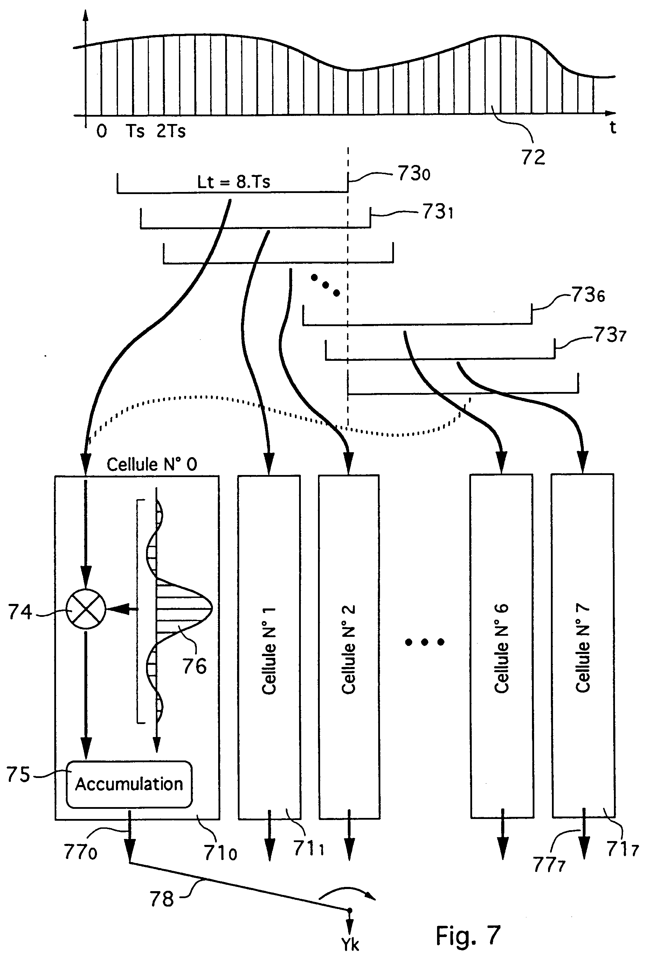

La figure 7 présente une structure canonique d'un filtre ainsi organisé en 8 cellules parallèles $71_0$ à $71_7$.

L'unité de temps étant Ts, le temps symbolique, Lt désigne la largeur temporelle de chaque jeu de coefficients exprimée en multiple de Ts. Lt est alors un entier valant généralement 6 ou 8.

Le signal 72 est échantillonné à 2 échantillons par symbole.

Le filtre global apparaît alors constitué de Lt cellules élémentaires $71_0$ à $71_7$.

Chaque cellule $71_i$ est en fait un filtre numérique, qui traite indépendamment les les échantillons retardés ($73_0$ à $73_7$) d'une valeur spécifique à cette même cellule. Les échantillons entrant dans la cellule numéro i sont retardés en moyenne de la valeur réelle i.Ts/Lt, i allant de 0 à Lt-1.

Chaque cellule $71_0$ assure la multiplication 74 de la portion d'échantillons $73_0$ par le vecteur 76 de coefficients sélectionné, puis l'accumulation 75 du résultat de la multiplication.

Ainsi, on obtient tous les Lt.Ts (Lt.Ts correspondant à la longueur temporelle commune des réponses impulsionnelles de chaque filtre) Lt échantillons filtrés $77_0$ à $77_7$ qui sont démultiplexés par le dispositif de démultiplexage 78.

Chaque cellule produit donc un échantillon filtré tous les Lt.Ts : à cette cadence, quand se termine le calcul d'un échantillon filtré - lors de la dernière multiplication - accumulation d'un échantillon entrant par un coefficient du filtre choisi - on peut dès l'échantillon entrant suivant commencer le calcul du prochain échantillon filtré.

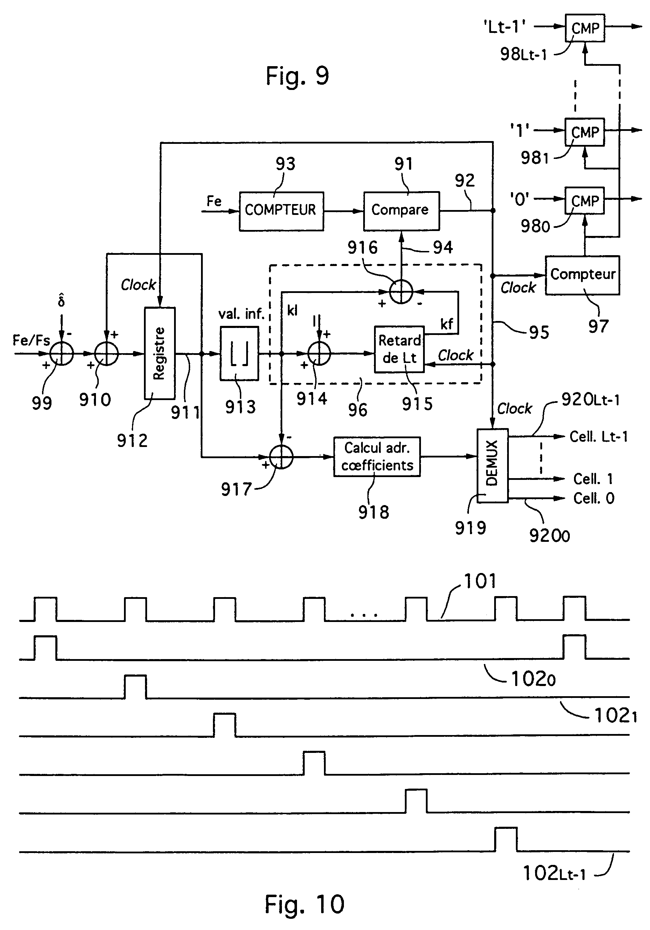

La structure interne d'une cellule est donc simplement celle d'un filtre dont le jeu de coefficients est choisi par une logique de commande. Elle est illustrée en figure 8.

Les échantillons entrants comprennent une partie réelle $X_r(k)$ et une partie imaginaire $X_i(k)$ qui subissent un traitement symétrique, ainsi que cela apparaît clairement. On ne décrit donc ci-dessous que le traitement de la partie réelle.

L'échantillon $X_r(k)$ est multiplié par un coefficient sélectionné dans la mémoire RAM 82, en fonction d'un signal d'adresse 83 correspondant à la sommation 84 d'une adresse de base 85 délivrée par les moyens de contrôle correspondant à chaque jeu de vecteurs, et du contenu d'un compteur d'adresses 86.

Le résultat 87 de la multiplication 81 est transmis à une unité arithmétique et logique 88, qui assure l'accumulation avec le rebouclage 89 du contenu d'un registre 810 contenant la sortie 811 de l'unité UAL 88. Le contenu 810 est transmis à un registre de sortie 812, qui délivre les éléments filtrés $Y_r(N.k)$.

Un seul signal de contrôle 813 (baptisé 'Clock' dans la suite) est nécessaire dans cette structure pour orchestrer toute la cellule. Il est inactif pendant toute la durée d'une accumulation, et n'est actif que pendant un coup d'horloge pour signifier à tous les composants impliqués que l'accumulation est terminée :

- le compteur d'adresses 86 revient à zéro ;
- une nouvelle adresse de base 85 est chargée ;
- la dernière valeur de l'accumulation est chargée dans le registre de sortie 812 ;
- l'UAL 88 laisse passer la valeur 87 issue du multiplieur 81 sans faire d'addition ;
- le registre d'accumulation prend donc cette nouvelle valeur.

La logique de contrôle globale, commune à toutes les cellules, peut être réalisée selon l'architecture illustrée en figure 9. Elle a essentiellement pour but de fournir à des cellules les signaux "clock" présentés ci-dessus, et illustrés en figure 10.

Ce signal doit passer à l'état actif (1) quand se termine une accumulation, c'est-à-dire au moment où le filtre délivre un échantillon filtré.

Une manière simple de construire ce signal consiste à utiliser un comparateur 91, dont la sortie 92 est à l'état inactif tant que ses deux entrées sont différentes, et passe à l'état haut (1) dans le cas contraire. Ces deux entrées sont les suivantes :

- la sortie d'un compteur 93 cadencé par la fréquence d'échantillonnage Fe ;
- une valeur 94 correspondant à la longueur d'une accumulation (ou encore d'un jeu de coefficients) délivré par un générateur 96 de la longueur des rampes de coefficients et rafraîchie au rythme plus lent du signal 'Clock' lui-même.

Le compteur de rampes excepté, tous les composants de la logique de contrôle sont sollicités une fois seulement par échantillon sortant du filtre (sous la commande du signal 'Clock').

Le signal 'Clock' 92 est illustré en figure 10, sous la référence 101. Il alimente un compteur 97, qui alimente lui-même une série de comparateurs $98_0$ à $98_{Lt-1}$, qui délivre les signaux correspondants $102_0$ à $102_{Lt-1}$ (figure 10).

La logique de contrôle comprend également les moyens de sélection du jeu de coefficients approprié. Un soustracteur 99 effectue la différence entre le rapport $F_e/F_s$ et l'estimation du retard $\hat{\delta} = \tau.F_e$, puis un sommateur 910 réalise la sommation du résultat de la soustraction 99 et du contenu 911 d'un registre 912 alimenté par ce sommateur 910.

Le contenu 911 est également transmis à un module 913 qui détermine la valeur entière juste inférieure à ce contenu 911, qui correspond à kl, et qui alimente le module 96 de génération de la longueur des rampes. Celui-ci ajoute 1 (914) pour obtenir la valeur entière juste supérieure, et lui applique un retard 915 de Lt pour fournir kf.

Un soustracteur 916 calcule la différence entre kf et kl, pour fournir la valeur 94 alimentant le comparateur 91.

Un soustracteur 917 effectue par ailleurs la différence entre la sortie 911 du registre 912 et kl, qui alimente un module 918 de calcul des adresses des coefficients. Ce dernier pilote un démultiplexeur 919 qui délivre les adresses de base des coefficients $920_0$ à $920_{Lt-1}$ pour chaque cellule.

## Revendications

1. Dispositif de réception d'un signal numérique source émis à une ou plusieurs fréquences symboliques source $F_s$, du type comprenant des moyens (44) d'échantillonnage d'un signal analogique reçu et ramené en bande de base (43) délivrant un signal échantillonné entièrement démodulé,

   lesdits moyens (44) d'échantillonnage fonctionnant à une fréquence d'échantillonnage $F_e$ respectant la condition d'échantillonnage généralisée,

   caractérisé en ce qu'il comprend un module (48) de filtrage unique filtrant ledit signal échantillonné, ledit module (48) de filtrage comprenant un filtre numérique (54) piloté par un vecteur de coefficients de filtrage et des moyens (58) de détermination desdits coefficients de filtrage en fonction d'un critère de détermination tenant compte d'une part du rapport de ladite fréquence d'échantillonnage $F_e$ sur ladite fréquence source $F_s$, de façon à assurer une interpolation dudit signal échantillonné, et d'autre part d'une analyse du canal de transmission, de façon à limiter les perturbations introduites par ledit canal.

2. Dispositif selon la revendication 1, caractérisé en ce que lesdits moyens (58) de détermination comprennent d'une part des moyens de calcul d'une pluralité de jeux de vecteurs de coefficients de filtrage, mis en oeuvre lors d'une phase d'initialisation dudit dispositif, lesdits jeux de vecteurs étant stockés dans des moyens de stockage (511, 82), chaque jeu de vecteurs correspondant à une fréquence symbolique source $F_s$ donnée,

   et d'autre part des moyens (84, 86) de sélection du vecteur le plus efficace dans le jeu de vecteurs correspondant à la fréquence symbolique source $F_s$ du signal en cours de réception, en fonction du rapport $F_e/F_s$ et d'une estimation $\delta\tau$ du retard de transmission dudit signal source.

3. Dispositif selon la revendication 2, caractérisé en ce que lesdits moyens (511, 82) de stockage comprennent une mémoire vive (RAM).

4. Dispositif selon l'une quelconque des revendications 1 à 3, caractérisé en ce que ledit critère de détermination est un critère de minimisation de l'erreur quadratique moyenne.

5. Dispositif selon l'une quelconque des revendications 1 à 4, caractérisé en ce que ledit module de filtrage comprend une série de Lt cellules de filtrage ($71_0$, $71_7$) identiques fonctionnant en parallèle, les sorties de chacune desdites cellules de filtrage étant multiplexées (78) pour restituer le signal numérique entièrement démodulé.

6. Dispositif selon la revendication 5, caractérisé en ce que chacune desdites cellules filtre une portion dudit signal échantillonné d'une durée Ts.Lt, Ts étant la durée d'un symbole dudit signal source, lesdites portions de signal étant décalées l'une par rapport à l'autre d'une durée Ts.

7. Dispositif selon l'une quelconque des revendications 5 et 6, caractérisé en ce que Lt est compris entre 5 et 10.

8. Dispositif selon l'une quelconque des revendications 5 à 7, caractérisé en ce que lesdits cellules comprennent des moyens d'accumulation (75) et de multiplication (74).

9. Dispositif selon l'une quelconque des revendications 1 à 4, caractérisé en ce que ledit module de filtrage comprend des moyens (52) de mémorisation, dans lesquels est introduit ledit signal échantillonné, une portion dudit signal échantillonné étant relu et filtré tous les Ts, Ts étant la durée d'un symbole dudit signal source.

10. Dispositif selon l'une quelconque des revendications 1 à 9, caractérisé en ce que lesdits moyens (58) de détermination déterminent également le nombre de coefficients formant chacun desdits vecteurs de coefficients de filtrage.

11. Dispositif selon l'une quelconque des revendications 1 à 10, caractérisé en ce que lesdits moyens (58) de détermination déterminent également la durée de la portion de signal filtré par ledit module de filtrage.

12. Dispositif selon l'une quelconque des revendications 1 à 11, caractérisé en ce que ledit module de filtrage comprend :

- des moyens (511) de stockage comprenant $N_j$ vecteurs de coefficients de filtrage ;
- Lt cellules de filtrage ($71_0$ à $71_7$) identiques fonctionnant en parallèle ;

et en ce que lesdits moyens (58) de détermination effectuent les calculs suivants :

$$A(n) = A(n\text{-}1) + F_e/F_s + \hat{\delta}_\tau(n).Fe$$

$$k_l(n) = Vl(A(n))$$

$$k_f(n) = k_l(n\text{-}L_t) + 1$$

$$J(n) = Vl(N_j.(A(n)\text{-}k_l(n)))$$

où :

A(n) est une valeur mise à jour à chaque symbole a(n) ;
[$k_f(n)$, $k_l(n)$] définit l'intervalle des échantillons dudit signal échantillonné pris en compte pour déterminer la variable de décision relative au symbole a(n) ;
J(n) désigne le numéro du vecteur de coefficients à mettre en oeuvre pour déterminer la variable de décision relative au symbole a(n) ;
$\hat{\delta}\tau$ est une estimation de rythme relative, correspondant à la différence algébrique entre deux estimations de rythme successives.

13. Dispositif selon l'une quelconque des revendications 1 à 12, caractérisé en ce que ledit module de filtrage unique est piloté par un signal de rythme (410) délivré par un estimateur de rythme (49) alimenté par ledit signal échantillonné.

14. Dispositif selon la revendication 13, caractérisé en ce que ledit estimateur de rythme (49) comprend des moyens de filtrage similaires audit module de filtrage, et exploitent les mêmes vecteurs de coefficients de filtrage.

15. Dispositif selon l'une quelconque des revendications 13 et 14, caractérisé en ce que ledit estimateur de rythme (49) est mis en oeuvre périodiquement, à des intervalles de temps relativement espacés, par rapport au temps symbole Ts.

16. Dispositif selon l'une quelconque des revendications 1 à 15, caractérisé en ce qu'un signal d'horloge unique (Clock), correspondant à l'horloge d'échantillonnage, pilote l'ensemble des composants formant ledit module de filtrage et/ou ledit estimateur de rythme.

17. Procédé de réception d'un signal numérique source émis à une fréquence symbolique source $F_s$ choisie parmi plusieurs fréquences symboliques source possibles, du type comprenant des étapes d'échantillonnage d'un signal analogique reçu et ramené en bande de base délivrant un signal échantillonné et de décodage restituant ledit signal numérique source,

ledit échantillonnage étant assuré à une fréquence d'échantillonnage $F_e$ fixe et quelconque, respectant le théorème d'échantillonnage de Shannon,

caractérisé en ce qu'il met en oeuvre un filtrage unique filtrant ledit signal échantillonné et délivrant un signal filtré auxdits moyens de décodage, comprenant :

une étape d'initialisation, consistant à déterminer une série de jeux de vecteurs de coefficients de filtrage, chaque jeu correspondant à une fréquence symbolique source $F_s$ donnée, et chaque vecteur correspondant à une situation de réception donnée, et

une étape de filtrage d'un signal source reçu, consistant à choisir le vecteur de coefficients de filtrage le plus précisément synchronisé pour corriger les effets du canal de transmission et/ou de l'échantillonnage asynchrone, dans le jeu de vecteurs correspondant à la fréquence symbolique source dudit signal source.

**18.** Procédé selon la revendication 17, caractérisé en ce que ladite étape d'initialisation comprend les étapes suivantes :

- détermination (61) d'un gabarit du canal de transmission, correspondant aux brouilleurs suceptibles d'être rencontrés ; et
- pour chaque fréquence symbolique source $F_s$ (63) :

  * choix d'une série de valeurs d'estimation $\tau$ de l'erreur de rythme (65) ;
  * pour chaque valeur d'estimation de l'erreur de rythme :

    . calcul (66) formel de la fonction de filtrage du canal de transmission, en dehors dudit filtrage unique ;
    . calcul (67) du bruit en entrée dudit filtrage unique ;
    . calcul (68) de l'erreur quadratique, sous une forme quadratique fonction de coefficients dudit filtrage unique ;
    . dérivation (69) de ladite forme quadratique et recherche des zéros correspondants ; et
    . stockage (610) des vecteurs de coefficients correspondants auxdits zéros.

EP 0 730 363 A1

Fig. 1

Fig. 2

EP 0 730 363 A1

**Fig. 3**

CONVERSION EN BANDE DE BASE — 12

14

32 — Ts

FILTRE ADAPTE — 33

34

FILTRAGE D'INTER-POLATION — 36

DECISION SUR LES SYMBOLES — 37

OSCILLATEUR FIXE — 31

CORRECTION DE PHASE — 35

ESTIMATION DE RYTHME — 38

11

13

**Fig. 4**

CONVERSION EN BANDE DE BASE — 42

43

C.A.N. — 44

X eps

PREFILTRAGE ET DECIMATION — 47

>2 eps

FILTRAGE INTERPOLATEUR ADAPTE — 48

1 eps

CORRECTION DE PHASE — 19

OSCILLATEUR FIXE — 46

45

411

ESTIMATION DE RYTHME — 49

410

ESTIMATION DE PHASE — 110

41

Fig. 5

Fig. 8

EP 0 730 363 A1

DETERMINATION
D'UN GABARIT — 61

FIXATION
DE Fe/Fs — 63

FIXATION
DE τ — 65

FONCTION DE
FILTRAGE
(SAUF FILTRE RECHERCHE) — 66

CALCUL DE BRUIT
EN ENTREE — 67

CALCUL DE L'ERREUR
QUADRATIQUE — 68

DERIVATION ET
RECHERCHE DES ZEROS — 69

64

STOCKAGE
DU VECTEUR — 610

62

NOUVEAU τ          NOUVEAU DEBIT

FIN

Fig. 6

Fig. 7

## Fig. 9

## Fig. 10

Office européen
des brevets

**RAPPORT DE RECHERCHE EUROPEENNE**

Numero de la demande

EP 96 40 0446

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP-A-0 609 095 (SIGNAL PROCESSORS LTD) 3 Août 1994<br>* colonne 2, ligne 32 - ligne 41 *<br>* colonne 3, ligne 15 - ligne 48 *<br>* colonne 7, ligne 25 - ligne 34 *<br>* colonne 16, ligne 21 - ligne 36 *<br>* colonne 17, ligne 14 - ligne 46 *<br>* colonne 18, ligne 28 - ligne 48 *<br>* colonne 18, ligne 50 - colonne 19, ligne 6 *<br>* colonne 19, ligne 34 - ligne 38 *<br>* colonne 20, ligne 58 - colonne 21, ligne 10 *<br>* colonne 28, ligne 46 - ligne 56 *<br>* figures 1,4,10,11 *<br>--- | 1-3,12, 14,16 | H04L25/03<br>H04L7/02 |
| Y<br><br>A | EP-A-0 466 434 (SONY CORP) 15 Janvier 1992<br><br>* page 3, ligne 38 - page 4, ligne 5 *<br>* page 4, ligne 43 - page 6, ligne 8; figures 1,2 *<br>--- | 1-3,12, 14,16<br>4,13,17 | |
| A | ICASSP-92: 1992 IEEE INTERNATIONAL CONFERENCE ON ACOUSTICS, SPEECH AND SIGNAL PROCESSING (CAT. NO.92CH3103-9), SAN FRANCISCO, CA, USA, 23-26 MARCH 1992, vol. 4, 23 Mars 1992, ISBN 0-7803-0532-9, 1992, NEW YORK, NY, USA, IEEE, USA, pages 485-488 vol.4, XP000467240 GHOSH B R ET AL: "Asynchronous adaptive equalization in voiceband data modems"<br>* page 485, colonne de droite, ligne 19 - page 487, colonne de gauche, ligne 50 *<br>--- | 1-3, 12-18 | |

**DOMAINES TECHNIQUES RECHERCHES (Int.Cl.6)**

H04L
H03H

-/--

Le présent rapport a été établi pour toutes les revendications

| Lieu de la recherche | Date d'achèvement de la recherche | Examinateur |
|---|---|---|
| LA HAYE | 10 Juin 1996 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numero de la demande

EP 96 40 0446

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | IEEE INTERNATIONAL CONFERENCE ON COMMUNICATIONS '86. ICC '86: 'INTEGRATING THE WORLD THROUGH COMMUNICATIONS'. CONFERENCE RECORD (CAT. NO.86CH2314-3), TORONTO, ONT., CANADA, 22-25 JUNE 1986, vol. 3, 22 Juin 1986, 1986, NEW YORK, NY, USA, IEEE, USA, pages 1455-1459 vol.3, XP002005127 WATANABE K: "Adaptive matched filter and its significance to anti-multipath fading" * page 1457, colonne de droite, ligne 61 - page 1458, colonne de gauche, ligne 21 * * page 1457, colonne de droite, ligne 26 - ligne 43; figure 4 * --- | 1,4,12, 17 | |
| A | EP-A-0 340 978 (INT STANDARD ELECTRIC CORP) 8 Novembre 1989 * page 3, ligne 42 - ligne 48 * * page 8, ligne 8 - ligne 25 * * page 21, ligne 11 - page 22, ligne 11 * * page 26, ligne 23 - ligne 55 * * figures 1A-1C,11 * * figures 21A,12B * --- | 1-3,13, 17 | |
| A | US-A-4 856 030 (BATZER JOHN L ET AL) 8 Août 1989 * colonne 4, ligne 61 - ligne 68 * * colonne 7, ligne 19 - ligne 32 * * colonne 10, ligne 22 - colonne 11, ligne 30; figures 3-6 * ----- | 1-3,13, 17 | |

**DOMAINES TECHNIQUES RECHERCHES (Int.Cl.6)**

Le présent rapport a été établi pour toutes les revendications

| Lieu de la recherche | Date d'achèvement de la recherche | Examinateur |
|---|---|---|
| LA HAYE | 10 Juin 1996 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P04C02)